# EUROPEAN PATENT APPLICATION

(11) **EP 4 473 826 A2**
(43) Date of publication of application: **11.12.2024**
(21) Application number: 24193669.9
(22) Date of filing: 24.06.2022
(51) Int. Cl.: A01G 33/00

(54) **A SEAWEED FARM, A PROCESS FOR FARMING SEAWEED AND A METHOD OF PROCESSING FARMED SEAWEED**

(30) Priority: 25.06.2021 GB 202109196
(62) Divisional of application: 22748063.9
(71) Applicant: Redrose Developments, Belmullet, Co. Mayo, F26 X967 (IE)
(72) Inventor: RUDDY, Ann, Mayo, F26 X967 (IE)
(74) Representative: Mutlu, Aydin

(57) **Abstract**

The present invention relates to a seaweed processing plant, more specifically a portable seaweed processing plant. The portable seaweed processing plant comprises a shipping container having a substantially rectangular cuboid shaped body with at least one releasably securable door to provide access to and from the interior of the container. The container is configured for transport on an articulated chassis. The shipping container houses a seaweed processing line.

## Description

### TECHNICAL FIELD

This invention relates to a portable seaweed processing plant as well as a method of processing farmed seaweed.

### BACKGROUND ART

The efficient and effective processing of seaweed can be surprisingly problematic. Although the material itself is relatively straightforward to handle and manipulate, and does not pose many challenges in that regard, there is a problem in that as soon as the seaweed is harvested, it rapidly begins to biodegrade and lose many of its beneficial nutritional and microbial properties. This is problematic for any raw material, but for a commodity that is already relatively low in value like seaweed, this is highly disadvantageous and can render the crop economically unviable to harvest unless at significant and unsustainable scale. Accordingly, it is desirable to process the seaweed as soon as possible after harvesting so that it remains healthy and retains as much of the microbial activity and the micronutrients as possible, resulting in a higher and more valuable yield from the crop.

CN 105595375 A discloses a seaweed (laver) processing plant comprising a cleaning and drying machine wherein the seaweed processing line includes a seaweed washing station with high pressure nozzles and brushes.

WO 2017/222373 A1 discloses a seaweed harvesting system for collecting seaweed comprising an intake section, a transport device and a cutting device for cutting the seaweed from the substrate, wherein the cutting device comprises a pre-tensioning system to control a cutting force applied to the substrate.

WO 2010/059801 A2 provides a method of processing algae comprising: harvesting wild algae; preprocessing the algal harvest to remove undesirable materials from the harvested algae; and drying the algae with the exhaust gases from a gas turbine generator.

Foregoing equipment and methods of the prior art are not suitable for quick processing of harvested seaweed without additional burden. Conventional systems also do not allow separation of seaweed into liquid and solid seaweed as well as packaging of the same for onward transportation. Therefore, it is an object of the present invention to provide a portable seaweed processing plant and a method of processing farmed seaweed implemented by said plant.

### BRIEF DESCRIPTION OF THE DRAWINGS

Figure 1 is a perspective view of a portable seaweed processing plant according to the invention.
Figure 2 is a diagrammatic side view of the portable processing plant with the components thereof shown in outline.

### DETAILED DESCRIPTION

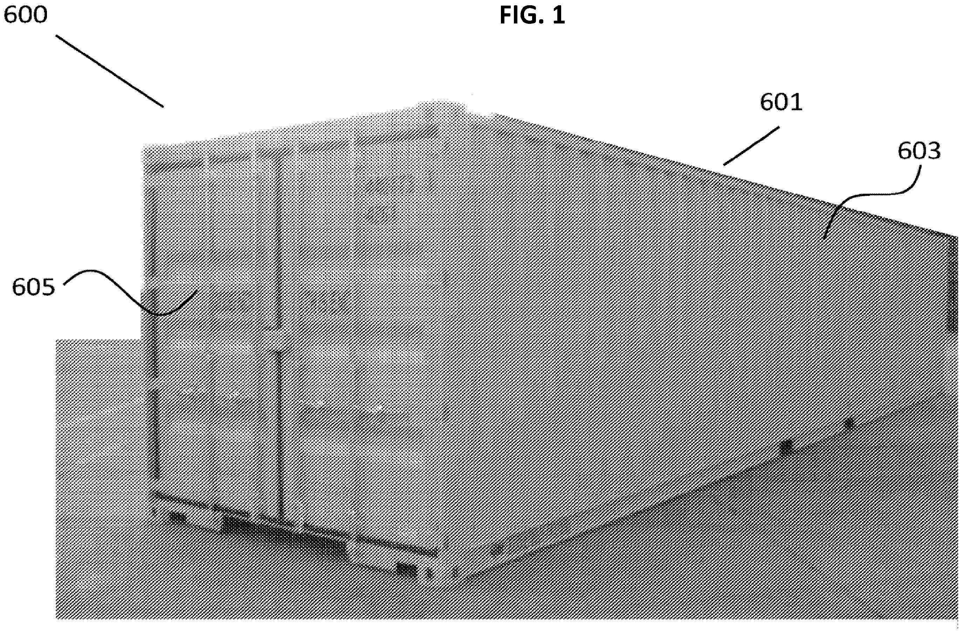

Referring to Figure 1, there is shown a perspective view of a portable seaweed processing plant, indicated generally by the reference numeral 600, for use in the process according to the invention. The portable seaweed processing plant comprises a shipping container (601) have a rectangular cuboid-shaped body (603) with a releasably securable door (605) at one end thereof. There may be provided a releasably securable door (not shown) at the other end so that product may enter the container at one end, pass through the container for processing, and processed product may exit the container at the other end.

The shipping container (601) is configured to be transported on the rear of an articulated chassis (not shown) and towed from one location to another, and when at the location may be dismounted from the articulated chassis if suitable lifting equipment is available. Indeed, it is envisaged that a lifting truck, such as a forklift truck, may be transported internal the container or on the rear of the articulated chassis for loading and unloading the portable seaweed processing plant

Internal the container, there is provided a seaweed processing line (not shown) including a seaweed washing station, a seaweed pre-processing station, a seaweed separation station, and a seaweed packing station. The processing line is capable of receiving a harvest of fresh seaweed within minutes of the fresh seaweed being brought ashore and processing that seaweed to obtain packaged liquid seaweed product and solid seaweed product

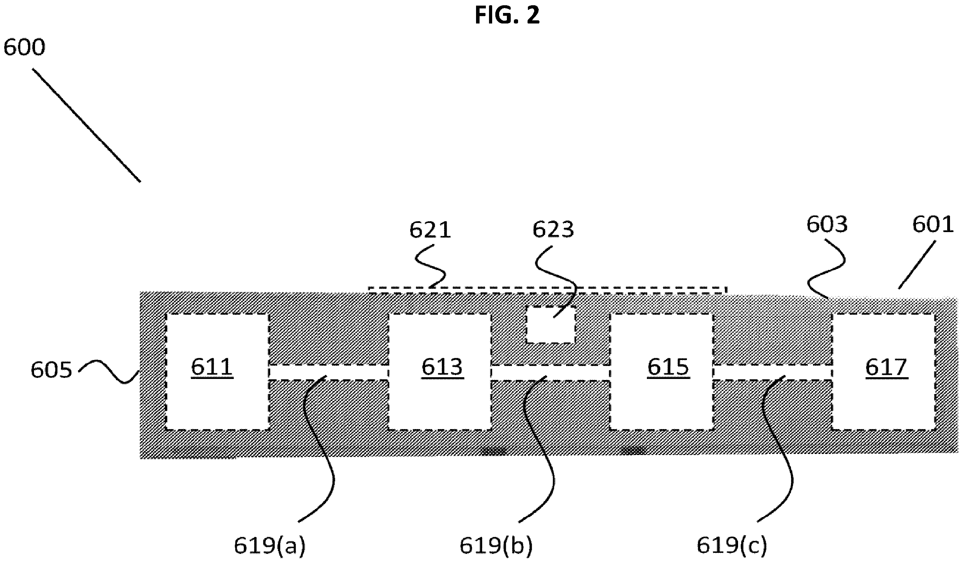

Referring now to Figure 2, there is shown a diagrammatic side view of the portable processing plant (600) with the components of the portable seaweed processing plant and the seaweed processing line shown in dashed outline as they are located internal, and in some cases external, the shipping container (601). The seaweed processing line includes a seaweed washing station (611), a seaweed pre-processing station (613), a seaweed separation station (615) to separate the seaweed into liquid seaweed and solid seaweed, and a seaweed packing station (617) to pack the liquid seaweed and the solid seaweed for onward transport. The stations (611, 613, 615, 617) are shown joined together in a processing line by conveyors (619(a), 619(b) and 619(c)).

A power supply is provided by way of a solar panel array (621) mounted on the roof of the body (603) of the shipping container (601). Preferably, the solar panel array (621) may be mounted on a frame (not shown) to allow the solar panel array to be directed towards the incident rays from the sun to provide a more efficient solar panel array output. Instead of or in addition to the solar panel array, a wind turbine (not shown) may be provided that could, if desired, be mounted on the roof of the container (601). It is envisaged that the wind turbine may pivot to and from an upright operation position and a substantially horizontal storage position lying along the roof of the container. In this way, the wind turbine will be protected and only deployed when required by pivoting the wind turbine to its upright position. A backup generator (623) is provided if there is a shortfall in power generated by either of the renewable energy supplies (wind turbine and solar array).

In addition to the foregoing, a water tank may be provided in the container for storage of water for washing the seaweed in the seaweed washing station (611). The washing station is provided to remove sand, crustaceans and other detritus from the seaweed before it is passed onwards for further processing. The water tank may be provided with a filtration system so that the water may be recycled and any materials removed from the seaweed can be removed from the water and disposed of in an environmentally friendly manner.

The seaweed washing station (611) comprises one or more of: (i) an immersion bath; (ii) at least one spray nozzle; (iii) a sprinkler; (iv) a hand-operated hose; (v) a conveyor; and (vi) a centrifuge. Indeed, the seaweed washing station may comprise a plurality of these stations. The specific choice may depend in part on at least one or more of the type of seaweed, the level of pollution (if appropriate) on the seaweed, the season, and the amount of material on the seaweed. Therefore, a number of the options may be provided as part of the seaweed washing station and the appropriate seaweed washing option chosen depending on the raw material. Once washed, the seaweed is passed along conveyor (619(a)) to the seaweed pre-processing station (613).

The seaweed pre-processing station (613) comprises one or more of: (i) a sonication device; (ii) a bead beater; (iii) a cavitation unit; and (iv) an autoclave. Again, the seaweed pre-processing station may comprise a plurality of these components (or indeed other components suitable to achieve the desired result) as the specific choice of component may depend in part on at least one or more of the type of seaweed, the consistency of the seaweed, and the season. For example, more rugged types of seaweed, and/or more mature crops of seaweed, may require more aggressive pre-processing techniques in the pre-processing station (613) in order to achieve the desired effect, which is to break down the cellular structure of the seaweed and release the nutrients into a liquid form. Indeed, in some cases, it will be desirable to pass the seaweed through two or more of the components in the pre-processing station (613). A number of the components may be provided as part of the seaweed pre-processing station (613) and the appropriate washing option(s) chosen depending on the raw material. Once preprocessed, the seaweed is passed along conveyor (619(b)) to the seaweed separation station (615).

The seaweed separation station (615) comprises a vat (not shown) or other suitable receptacle having one or more of: (i) a mixer: (ii) a heat source: and (iii) a chopper therein for agitating the seaweed and separating the liquid seaweed from the solid seaweed. This part of the process, namely the separation and retrieval of the liquid seaweed from the solid seaweed, is a fundamental component of the present invention. By separating the seaweed in this way, it is possible to subsequently package the liquid seaweed, with the many nutrients and advantageous features thereof in a concentrated format, and sell that liquid seaweed as a relatively high-value commodity in industries such as food processing, cosmetics, nutraceuticals, pharmaceuticals and the like. The solid seaweed, having less nutrients and less minerals, or at least having the same amount of nutrients and minerals but in a less concentrated form, may be sold separately as a different (lower value) product into industries such as food processing, animal feed and fertilizer. In this way, the financial return from the harvest is optimized as well as obtaining a greater yield of product from the harvest. Again, the type of treatment applied to the seaweed in the seaweed separation station may differ depending on the type of seaweed, the consistency of the seaweed, and the season. Once separated, the liquid seaweed and the solid seaweed are passed along conveyor (619(c)) to the seaweed packing station (617).

Once the liquid seaweed and the solid seaweed reach the seaweed packing station (617), they are packed separately for onward transport to customers, for further processing into food products, animal feed, pharmaceuticals, cosmetics or the like. The packaged seaweed may be shipped directly, immediately after processing in the portable seaweed processing plant, in another transport vehicle (not shown), or the packaged seaweed may be stored in the shipping container (601) until a critical mass of product has been harvested and it is financially worthwhile to ship the consignment of goods to a customer.

It will be understood that various modifications could be made to the portable seaweed processing plant (600) described herein without departing from the invention. For example, a drying station may be provided to dry out the solid seaweed. The drying station could be located intermediate the seaweed separation station (615) and the seaweed packing station (617). In addition, a press may be provided as part of or separate to the vat and other equipment in the seaweed separation station (615). The press would effectively squeeze the seaweed to release moisture from the seaweed. Indeed, a press could be part of the seaweed pre-processing station (613).

In addition to the foregoing, it is envisaged that the portable seaweed processing plant (600) may further comprise a temperature control unit for controlling the internal temperature in the shipping container (601). The temperature control unit may be operable to heat and/or cool the interior of the shipping container. It is envisaged that it is preferable to not allow the temperature of the seaweed exceed 36°C. Therefore, the internal temperature may be monitored to keep the temperature to an acceptable level. Furthermore, this may be useful to provide a more comfortable working environment internal the portable seaweed processing plant, allowing the portable seaweed processing plant to be used in a number of different climates, locations and seasons.

The present invention also relates to a new process for processing seaweed. The method entails using the apparatus described above to process the seaweed on location, closely adjacent to where the seaweed is landed. In this way, the seaweed will be fresh when it is being processed and the yield from the harvest will be increased, with additional relatively high-value products being obtained from the harvest

In this specification the terms "comprise, comprised, comprises and comprising" and the terms "include, includes, included and including" are all deemed totally interchangeable and should be afforded the widest possible interpretation.

## Claims

1. A portable seaweed processing plant (600) comprising a shipping container (601) having a substantially rectangular cuboid shaped body (603) with at least one releasably securable door (605) to provide access to and from the interior of the container (601), the container (601) being configured for transport on an articulated chassis, the shipping container (601) having housed therein a seaweed processing line comprising: a seaweed washing station (611) and a seaweed pre-processing station (613).

2. A portable seaweed processing plant (600) according to claim 1 wherein the seaweed processing line further comprises a seaweed separation station (615) to separate the seaweed into liquid seaweed and solid seaweed.

3. A portable seaweed processing plant (600) according to claim 1 wherein the seaweed processing line further comprises a seaweed packing station (617) to pack the liquid seaweed and the solid seaweed for onward transport

4. A portable seaweed processing plant (600) according to claim 1 wherein there is provided a water tank and a filtration system for filtration of the water used in the seaweed washing station (611).

5. A portable seaweed processing plant (600) according to claim 1 wherein the seaweed washing station (611) comprises one or more of: (i) an immersion bath: (ii) at least one spray nozzle; (iii) a sprinkler; (iv) a hand-operated hose; (v) a conveyor: and (vi) a centrifuge.

6. A portable seaweed processing plant (600) according to claim 1 wherein the seaweed pre-processing station (613) comprises one or more of: (i) a sonication device; (ii) a bead beater; (iii) a cavitation unit; and (iv) an autoclave.

7. A portable seaweed processing plant (600) according to claim 2 wherein the seaweed separation station (615) comprises a vat having one or more of: (i) a mixer: (ii) a heat source: and (iii) a chopper.

8. A portable seaweed processing plant (600) according to claim 1 wherein the processing plant (600) comprises a drying station for drying the solid seaweed.

9. A portable seaweed processing plant (600) according to any of the claims 1 to 3, wherein the container (601) is provided with a conveyor (619(a), 619(b), 619(c)) intermediate each of the stations.

10. A portable seaweed processing plant (600) according to claim 1 wherein the container (601) is provided with a dedicated power supply which is powered by a renewable energy source or a generator.

11. A portable seaweed processing plant (600) according to claim 1 wherein the container (601) is provided with a temperature control unit

12. A portable seaweed processing plant (600) according to claim 1 wherein the temperature control unit is operable to maintain the temperature inside the container (601) at or below 36°C.

13. A portable seaweed processing plant (600) according to claim 1 wherein the container (601) is provided with a releasably securable door at other end of the body (603).

14. A method of processing seaweed comprising processing the seaweed in the portable seaweed processing plant (600) as claimed in any of claims 1 to 13.
